# EUROPÄISCHE PATENTSCHRIFT

(11) **EP 0 839 877 B1**
(45) Veröffentlichungstag und Bekanntmachung des Hinweises auf die Patenterteilung: **07.01.2004**
(21) Anmeldenummer: 97117910.6
(22) Anmeldetag: 16.10.1997
(51) Int. Cl.: C09D 7/12

(54) **Neue Verdickungsmittel-Zubereitungen auf Polyurethanbasis und ihre Verwendungen**
New polyurethane based binder preparations and their uses
Nouvelles compositions d'un liant à base de polyuréthane et leurs utilisations

(30) Priorität: 29.10.1996 DE 19644933
(43) Veröffentlichungstag der Anmeldung: 06.05.1998
(73) Patentinhaber: Borchers GmbH, 40764 Langenfeld (DE)
(72) Erfinder: Link, Günter, 38644 Goslar (DE); Edelmann, Dirk, Dr., 42119 Wuppertal (DE); Pattou, Alain, 81290 Viviers les Montagnes (FR)
(74) Vertreter: Pettrich, Klaus-Günter, Dr.

(56) Entgegenhaltungen:
- EP-A- 0 618 243
- GB-A- 1 601 220

## Beschreibung

Die Erfindung betrifft Verdickungsmittel-Zubereitung zur Verdickung wässriger Lacksysteme, welches besteht aus
1) einem Urethangruppen aufweisenden, in Wasser löslichen oder dispergierbaren Verdickungsmittel,
2) einem nicht-ionischen Emulgator,
3) einem erfindungsgemäßen Lösemittel und
4) Wasser.

Weiterhin handelt die Erfindung von der Anwendung derartiger Zubereitungen als verdickend wirkende Zusatzmittel in wässrigen Systemen.

Die Erfindung betrifft somit eine neue Verdickungsmittel-Zubereitung zur Verdickung wasserverdünnbarer Systeme. Im folgenden sollen als wasserverdünnbare Systeme alle solche Zubereitungen von Farben, Anstrichfarben und Bindemitteln verstanden werden, die mit Wasser homogen mischbar sind oder verdünnt werden können.

Verdicker auf Polyurethanbasis für die o.g. Systeme werden in zahlreichen Veröffentlichungen beschrieben (z:B. DE-A 1 444 243, 3 630 319, 4 310 702, EP-A 0 307 775, 495 373, US-A 4 079 028, 4 155 892, 4 499 233, 5 023 309). Aus der GB-A 1 601 220 sind Polyurethan-Verdicker zum Einsatz in Druckpasten bekannt geworden, die inerte organische Lösungsmittel enthalten. Im Gegensatz zu den Dicarbonsäureester enthaltenden Verdickern gemäß vorliegender Erfindung beeinflussen diese jedoch das Eigenschaftsprofil der Formulierungen nachteilig.

Diesen Verdickungsmitteln ist gemeinsam das gleichzeitige Vorliegen von linearen oder verzweigten Polymeren, die aus hydrophilen Segmenten, worunter insbesondere Polyetherketten mit mindestens 5 Kettengliedern einer Alkylenoxideinheit, vorzugsweise Ethylenoxid, zu verstehen sind, aus hydrophoben Segmenten, worunter insbesondere Kohlenwasserstoffsegmente mit mindestens 6 C-Atomen zu verstehen sind und aus Urethangruppen aufgebaut sind. Diese im folgenden als Komponente A genannten Stoffe der erfindungsgemäßen Zubereitungen entsprechen üblicherweise dieser Definition.

Solche Polyurethanverdicker eignen sich als Hilfsmittel bzw. Additive zur Einstellung oder Änderung der rheologischen Eigenschaften von wässrigen Lacksystemen, z.B. Industrielacken, von wässrigen Putzen und Anstrichfarben, Druck und Textilfarben, Pigmentdruckfarben, aber auch pharmazeutischen und kosmetischen wässrigen Zubereitungen, z.B. Cremes u.ä., Pflanzenschutzformulierungen, Füllstoffdispersionen usw.

Neben den oben beschriebenen Polymeren, die auch als "Wirkstoffe" bezeichnet werden, bestehen Verdickungsmittel-Zubereitungen nach dem Stand der Technik zusätzlich aus einem nicht-ionischen Emulgator, Hilfsstoffen und Wasser sowie weiteren Zusätzen. Solche Zubereitungen weisen einen Nachteil auf. Sie besitzen in Form ihrer wässrigen Lösung eine hohe Eigenviskosität, die die Einarbeitung als auch die Verarbeitung in wasserverdünnbaren Systemen erschwert.

Es wurden eine Reihe von Versuchen beschrieben, die Eigenviskosität der Verdickungsmittel herabzusetzen. So wurden z.B. die o.g. Polymere in ihrem Molekulargewicht herabgesetzt, was aber bislang eine Verschlechterung der rheologischen Eigenschaften zur Folge hatte. Auch wurden verschiedene Emulgatoren und weitere Zusätze mit emulgativen Eigenschaften beschrieben. Auch hier waren Verschlechterungen der rheologischen Eigenschaften zu verzeichnen.

Eine weitere bekannte Methode zur Herabsenkung der Eigenviskosität ist der Zusatz von wassermischbaren Lösemitteln, z.B. ein- oder mehrwertigen Alkoholen. Dies hat aber meist eine Verschlechterung der Umweltverträglichkeit zur Folge, auch werden teilweise anwendungstechnische Eigenschaften der wässrigen Zubereitungen wie Streicheigenschaften oder Stabilität herabgesetzt.

Die der Erfindung zugrundeliegende Aufgabe bestand daher darin, neue Verdickungsmittel-Zubereitungen auf Polyurethanbasis für wässrige Systeme zur Verfügung zu stellen, die in Form ihrer wässrigen Lösungen, Emulsionen oder Dispersionen im Vergleich zu analogen Systemen des Standes der Technik zum einen eine erniedrigte Eigenviskosität, auf der anderen Seite aber verbesserte rheologische Eigenschaften aufweisen.

Diese Aufgabe konnte überraschend dadurch gelöst werden, daß den Verdickungsmitteln auf Polyurethanbasis neben den größtenteils bekannten Emulgatoren als weitere Zusatzmittel bestimmte kurzkettige Ester der nachstehend als Komponente C näher beschriebenen Art zugesetzt werden.

Gegenstand der Erfindung sind demnach Verdickungsmittel-Zubereitungen zur Rheologieeinstellung wässriger Systeme aus
A) einem Urethangruppen aufweisenden Verdickungsmittel,
B) einem nicht-ionischen Emulgator,
C) einem erfindungsgemäßen Hilfsmittel und
D) Wasser und/oder weiteren wasserverdünnbaren Lösemitteln bzw. Verdünnungsreagenz.

Hierbei wurde beobachtet, daß die gleichzeitige Zugabe der nachstehend näher beschriebenen Komponenten B und C auf einem Synergismus bezüglich der eigenviskositätserniedrigenden Wirkung einerseits und der Rheologieverbesserung andererseits hinausläuft, da bei gleicher Konzentration der Emulgatoren B in Anwesenheit der erfindungsgemäßen Hilfsmittel C eine wesentliche Reduzierung der Eigenviskosität der wässrigen Lösungen bzw. Dispersionen erfolgt, aber auch bei vergleichbarer Eigenviskosität in Anwesenheit der erfindungsgemäßen Hilfsmittel C geringere Konzentrationen an Emulgatoren B erforderlich sind.

Die Komponente C setzt sich aus Verbindungen der Formel (I) zusammen 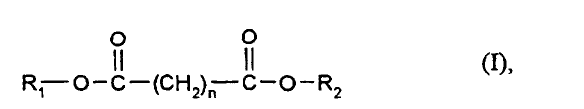 in welcher unabhängig voneinander
- R₁: ein aliphatischer Alkylrest von C₁-C₆ oder ein cyclischer Alkylrest von C₁-C₆, insbesondere R₁ = Methyl, Ethyl- oder Propylrest,
- R₂: ein aliphatischer Alkylrest von C₁-C₆ oder ein cyclischer Alkylrest von C₄-C₆, insbesondere R₁ = Methyl, Ethyl- oder Propylrest, und
- n: ist eine ganze Zahl von 1 bis 6, vorzugsweise von 1 bis 4,
bedeutet.

Erfindungsgemäß sind auch Gemische von verschiedenen Verbindungen der allgemeinen Formel (I).

Die Komponente A der erfindungsgemäßen Zubereitungen besteht aus Polyurethanverdickungsmitteln der an sich bekannten Art. Beschreibungen von solchen Polymeren finden sich z.B. in der DE-A 4 310 702, US-A 4 079 029 und WO 8 902 451. Erfindungsgemäße Zubereitungen können auch Mischungen verschiedener Polyurethanverdicker enthalten. Besonders bevorzugt im Sinne der vorliegenden Anmeldung sind Urethangruppen enthaltende Polymere der Art wie sie in Beispiel 1 oder 2 angegeben sind.

Die Komponente B der erfindungsgemäßen Zubereitungen besteht aus an sich bekannten Emulgatoren. Bevorzugt sind hier Verbindungen auf Basis von Polyethylenoxiden, z.B. Synperonic® (ICI) oder auf Basis von Polyphenylenoxiden, z.B. Borchigen DFN® (Borchers GmbH). Erfindungsgemäße Zubereitungen enthalten zwischen 0 und 40 Gew.-%, vorzugsweise zwischen 10 und 30 Gew.-%, bezogen auf die Gesamtverdickerzubereitung, der Komponente B.

Die Komponente D der erfindungsgemäßen Zubereitungen besteht aus Wasser. Erfindungsgemäß sind auch Mischungen von Wasser und wasserverdünnbaren organischen Verbindungen, z.B. Lösungsmittel wie Ethylenglykol, Alkoxyalkylester oder auch Polyethylenoxide oder Polyethylenglykole. Der Anteil der weiteren Lösemittel liegt erfindungsgemäß nicht höher als 10 Gew.-%, bezogen auf die Gesamtverdickerzubereitung.

In den erfindungsgemäßen Verdickungsmittel-Zubereitungen liegt die Komponente A in einer Menge von 5 bis max. 60 Gew.-% der Gesamtzubereitungsmenge vor. Bevorzugt sind Anteile von 10 bis 30 Gew.-% an der Gesamtzubereitungsmenge.

Die Komponente B liegt in den erfindungsgemäßen Zubereitungen in Mengen von 0 bis 150 Gew.-% bezogen auf die Menge der Komponente A vor. Bevorzugt sind Mengen von 50 bis 100 Gew.-% bezogen auf die Menge der Komponente A. Die Gesamtmenge der Komponenten A und B in den erfindungsgemäßen Zubereitungen liegt bei 25 bis 90 Gew.-% bezogen auf die Gesamtmenge der Verdickerzubereitung.

Der Anteil der erfindungswesentlichen Komponente C liegt zwischen 10 und 60 Gew.-% bezogen auf die Gesamtmenge der Zubereitung und bei 60 bis 130 Gew.-% bezogen auf die Gesamtmenge der Komponente A und B. Bevorzugt sind Mengen von 20 bis 40 Gew.-% bezogen auf die Gesamtzubereitungsmenge.

Neben den erfindungswesentlichen Einzelkomponenten können noch weitere Hilfsmittel vorliegen. Der Gewichtsanteil dieser Hilfsmittel liegt jedoch bei 0 bis 10 Gew.-% bezogen auf die Gesamtzubereitungsmenge.

Die Herstellung der erfindungsgemäßen Zubereitungen kann in an sich bekannter Weise erfolgen. So können die Komponenten B und C nacheinander unter Rühren und gegebenenfalls unter Erwärmen zu dem (z.B. in Wasser gelösten) Polyurethanverdicker A gegeben werden. Ebenfalls möglich ist die Herstellung einer Primärmischung aus den Komponenten B und C, die anschließend zu dem gegebenenfalls in Wasser gelösten Polyurethanverdicker der Komponente A zugegeben wird. Hierbei ist jedoch auf die Homogenität der Gemische aus B und C zu achten, da diese Komponenten nicht immer unbegrenzt mischbar sind. In diesem Zusammenhang kommt beispielsweise die Mitverwendung von weiteren Lösemitteln oder Verdünnungsmitteln innerhalb der Komponente D in Betracht.

Eine weitere erfindungsgemäße Variante der Herstellung der erfindungsgemäßen Verdicker-Zubereitungen besteht in der Zugabe der Komponenten B und C sowie D zum Polyurethanverdicker A unmittelbar nach dessen Synthese. Diese Methode ist besonders bevorzugt, weil sie wirtschaftliche Vorteile gegenüber den vorstehend genannten besitzt.

Die so hergestellten erfindungsgemäßen Zubereitungen stellen in der Regel wässrige Lösungen bzw. Emulsionen, in einigen Fällen Dispersionen mit einem Feststoffgehalt von 10 bis 80 Gew.-%, vorzugsweise 20 bis 50 Gew.-% dar, wobei unter "Feststoff" die Menge der Komponenten A und B im Verhältnis zur Gesamtzubereitungsmenge zu verstehen ist.

Die Eigenviskositätsmessung der oben beschriebenen erfindungsgemäßen Zubereitungen kann nach den bekannten Methoden erfolgen. Die Viskositäten liegen im Sinne der Erfindung in Bereichen, die eine problemlose und günstige Verarbeitung durch Gießen, Pumpen und/oder Rühren ermöglichen. Sie liegt, gemessen bei 10,3 s⁻¹ und 23°C bei 500 bis 10.000 mPas, bevorzugt bei 800 bis 5.000 mPas, bestimmt im Haake-Rotationsviskosimeter 550VT.

Die erfindungsgemäßen Zubereitungen können aufgrund ihrer niedrigen Eigenviskosität auch in ihrer konzentrierten Form der erfindungsgemäßen Verwendung zugeführt werden. Dabei ist es ein wichtiger Vorteil der vorliegenden Anmeldung, daß die Verdickerwirkung in den unten aufgeführten Systemen trotz der geringen Eigenviskosität nicht verschlechtert, sondern im Gegenteil verbessert wird. Auch das anwendungstechnisch-rheologische Erscheinungsbild von wässrigen Bindemittel- bzw. Lacksystemen wird durch Einsatz der erfindungsgemäßen Zubereitungen deutlich verbessert.

Ein weiterer Vorteil der vorliegenden Erfindung ist die gute Verträglichkeit der erfindungsgemäßen Zubereitungen mit den zu verdickenden wässrigen Systemen, z.B. Dispersionsfarben, was eine leichte Einarbeitbarkeit der Verdickungsmittel ermöglicht, wobei gleichzeitig die sogenannte Reifezeit der erhaltenen verdickten Zubereitungen, d.h. die Zeit bis zum Erreichen der maximal möglichen Viskosität, in der Regel erheblich verkürzt wird.

Die erfindungsgemäßen Zubereitungen eignen sich zur Verdickung von wässrigen bzw. überwiegend wässrigen Systemen wie z.B. Dispersionsfarben, Druck- und Pigmentpasten, Füllstoff- und Pigmentdispersionen, Papier-, Leder- und Textilhilfsmitteln, Zubereitungen für die Erdölförderung, Zubereitungen von Waschmitteln, Klebstoffen, Wachsen, Polituren, Formulierungen für pharmazeutische und veterinäre Zwecke, Pflanzenschutzzubereitungen, kosmetische Artikel usw.. Auch das Wasser selbst kann mit den erfindungsgemäßen Verdickem angedickt werden, um dann gegebenenfalls mit weiteren Zusätzen versetzt zu werden oder selbst zu wässrigen Zubereitungen zugesetzt zu werden.

Die erfindungsgemäßen Zubereitungen eignen sich nicht nur zur Verdickung von rein wässrigen Systemen, sondern auch von solchen Systemen, die anteilsmäßig organische Lösemitteln oder andere organisch-flüchtige Zusatzmittel enthalten, wie z.B. Alkohole. Alle erfindungsgemäß verdickbare Systeme können die üblichen Hilfs- und Zusatzmittel wie z.B. Entschäumer, Fließ- und Verlaufsmittel, Füllstoffe, Pigmente usw. enthalten.

Beispiele für erfindungsgemäß verdickbare Systeme sind wässrige Polyacrylatdispersionen, wässrige Lösungen von Mischpolymerisaten olefinisch ungesättigter Monomere, wässrige Polyvinylacetatdispersionen, wässrige Polyesterdispersionen und insbesondere gebrauchsfertige Zubereitungen der oben beschriebenen Art auf Basis derartiger Dispersionen.

Bei der Verwendung der erfindungsgemäßen Zubereitungen zur Verdickung von Dispersionsfarben führt dies zu einem oftmals deutlich verbesserten Verlauf dieser Systeme und einer verbesserten Oberflächenbeschaffenheit der aus diesen Systemen hergestellten Lackfilme. Ebenso wird sehr häufig eine verbesserte Benetzung von Pigmenten bzw. Füllstoffen beobachtet, wodurch der Dispergierprozess, d.h. die Herstellung der gebrauchsfertigen Dispersionsfarben erleichtert wird. Lackfilme, die unter Verwendung der erfindungsgemäß verdickten Dispersionsfarben hergestellt wurden, zeichnen sich häufig durch einen verbesserten Glanz aus.

Ein weiterer Gegenstand der Erfindung ist die Verwendung der erfindungsgemässen Lösungen oder Dispersionen als verdickend wirkende Zusatzmittel in wässrigen Systemen, ausgewählt aus der Gruppe der wässrigen oder wasserverdünnbaren Kraftfahrzeug- und Industrielacke, Putz- und Anstrichfarben, Druck- und Textilfarben, Pigmentdruckpasten, pharmazeutische und kosmetische Formulierungen, Zubereitungen von Waschmitteln, Klebstoffen, Wachsen und Polituren.

### Beispiel 1

### Herstellung einer Verdicker-Zubereitung

In einem 5.000 l-Reaktor werden 630,0 kg Polyethylenglykol 12000 gegeben und ca. 2 Stunden bei 100°C gerührt. Nachdem der Feuchtigkeitsgehalt unter 0,07 % gesunken ist, werden bei 100°C insgesamt 37,50 kg eines C₈-C₁₀-Fettalkohols und 630,0 kg eines Gemisches von Verbindungen der allgemeinen Formel (I) hinzugegeben. Nach Abkühlen auf 80°C werden langsam 4,70 kg Octa-Soligen® Sn-28 als Polymerisationskatalysator hinzugegeben. Direkt danach werden 58,00 kg Tolonate-HBD-LV (trimeres Isocyanat) und 120 kg der Mischung aus Verbindungen der allgemeinen Formel (I) hinzugegeben. Danach wird der Ansatz bei 100°C bis zur Viskositätseinstellung gerührt und weitere 90,00 kg des Gemisches und 6,00 kg eines C₈-C₁₀-Fettalkohols dazugegeben.

Dieses Gemisch wird dann nochmals auf 80°C erwärmt, mit 390 kg Propylenglykol, 390 kg eines C₈-C₁₈-, bevorzugt eines C₁₀-C₁₃-Fellalkohols als Komponente B und 540 kg Wasser versetzt. Nach Abkühlen des Ansatzes werden noch weitere 60,00 kg Fettalkohol C₁₀-C₁₂ als Komponente B und 60,00 kg Polypropylenglykol 12000 zugegeben.

Es resultieren 3.000 kg einer fertigen Verdicker-Zubereitung. Dieser Verdicker besitzt eine Eigenviskosität (10,3 s⁻¹, 23°C, Haake VT 550) von 5.000 bis 8.000 mPas und stellt eine fast farblose, klare Flüssigkeit dar. (Verdicker 1)

### Beispiel 2

### Weiteres Verfahren zur Herstellung einer Verdicker-Zubereitung

In einem 300 ml-Schraubdeckelglas werden 25,0 g eines bekannten Polyurethanwirkstoffes im Sinne der Komponente A (z.B. VP LS 2095 der Bayer AG) eingewogen und mit 25 g eines bekannten Emulgators im Sinne der Komponente B (z.B. Synperonic® 13/10°, ICI) versetzt. Zusätzlich werden 25,0 g eines erfindungsgemäßen Gemisches im Sinne der Komponente C aus Verbindungen der Formel (I) und 25,0 g Wasser als Komponente D hinzugegeben. Dieser Ansatz wird bei 80°C zu einer Schmelze erwärmt. Der noch warme Ansatz wird anschließend durch intensives Rühren homogenisiert und weitere 2 bis 3 Stunden bei 80°C gelagert bis eine klare Lösung resultiert. (Verdicker 2)

Zum Vergleich wird analog zu dem oben beschriebenen Verfahren anstelle der Komponente C nur Komponente D 50 g Wasser eingesetzt (Verdicker 3).

Dabei ergibt sich für Verdicker 2 eine Eigenvisikosität (10,3 s⁻¹, 23°C, Haake-Rotationsviskosimeter VT 550) von 800 bis 2.500 mPas, für Verdicker 3 eine Eigenviskosität von 8.000 bis 12.000 mPas.

### Beispiel 3

### Messung der Verdickerwirkung

5,0 g der jeweiligen erfindungsgemäßen Verdicker-Zubereitung werden in 45,0 g deionisiertem Wasser gelöst. Dann werden von dieser Lösung jeweils 2,0 g zu jeweils 98,0 g einer handelsüblichen Polyacrylatdispersion (Dilexo® RA3 der Firma Condea, Hamburg) unter Rühren hinzugegeben. Anschließend werden 10 Minuten mit einem Korbrührer bei 1.800 bis 2.000 min⁻¹ nachgerührt. Die Konzentration der Lösungen liegt somit bei 2,5 Gew.-%, bezogen auf den Polyurethanverdicker der Komponente A. Die so hergestellten Gemische bzw. Dispersionen werden dann 24 Stunden bei 23°C gelagert und anschließend wird die Viskosität gemessen.

Dabei ergaben sich folgende Meßwerte:

| Verdicker Nr. | Viskosität [mPas]* (bei 23,0°C, 10,3 s⁻¹) |
|---|---|
| 1 | 10.000 |
| 2 | 11.000 |
| 3 | 10.000 |

Man erkennt, daß trotz starkem Absenken der Eigenviskosität bei Verdicker 2 und geringerer Eigenviskosität bei Verdicker 1 die Wirkung als Verdicker erhalten bleibt. Beim Vergleich der Verdicker 2 und 3 (die sich nur in der Anwesenheit der erfindungsgemäßen Komponente C unterscheiden) wird deutlich, daß trotz erheblich geringerer Eigenviskosität die verdickende Wirkung gleich bleibt.

### Beispiel 4

### Auswertung verschiedener anwendungstechnischer Daten

Es wurde eine Glanzdispersion auf Acrylatbasis folgender Zusammensetzung hergestellt:

| | |
|---|---|
| AMP 90 (2-Amino-2-methylpropanol, 10 %ig in Wasser) | 1,3 g (Lehmann + Voss) |
| Borchigen ND (25 %ig in Wasser) | 13,6 g (Borchers GmbH, Monheim) |
| Neocryl AP 2860 | 3,2 g (ICI, Runcorn, England) |
| Verdicker-Zubereitung | 9,0 g |
| Titandioxid RHD-2 | 112,5 g |
| Methoxypropanol | 8,5 g |
| Propylenglykol | 8,5 g |
| Butylglykol | 8,5 g |
| Wasser | 50,0 g |

Diese Mischung wird 30 Minuten im Skandex mit 100 g Glaskugeln 3 mm dispergiert. Anschließend werden hinzugegeben:

| | |
|---|---|
| Wasser | 23,4 g |
| Neocryl XK 62 | 270,0 g (ICI, Resins, England) |

Dieser Ansatz wird wiederum 10 Minuten im Skandex dispergiert. Es wurden Glanzdispersionen mit den Verdickern 1, 2 und 3 angesetzt und folgende Viskositäten (10,3 s⁻¹, 23°C, Haake-Rotationsviskosimeter VT 550) gemessen:

| | |
|---|---|
| Glanzdispersion mit Verdicker 1 | 30.000 bis 32.000 mPas |
| Glanzdispersion mit Verdicker 2 | 19.000 bis 21.000 mPas |
| Glanzdispersion mit Verdicker 3 | 14.000 bis 17.000 mPas. |

Bei der Überprüfung des Standvermögens (Ablaufverfahren an senkrechter Fläche) ergaben sich folgende Werte:

| | |
|---|---|
| Glanzdispersion mit Verdicker 1 | kein Verfließen bis 2,5 mm |
| Glanzdispersion mit Verdicker 2 | kein Verfließen bis 1,5 mm |
| Glanzdispersion mit Verdicker 3 | kein Verfließen bis 0,750 mm. |

Die Beurteilung des Verlaufverhaltens (Verfließgrenze an waagerechter Fläche) ergab folgende Werte:

| | |
|---|---|
| Glanzdispersion mit Verdicker 1 | kein Verfließen bis 2,0 mm |
| Glanzdispersion mit Verdicker 2 | kein Verfließen bis 1,25 mm |
| Glanzdispersion mit Verdicker 3 | kein Verfließen bis 1,00 mm. |

## Patentansprüche

1. Verdickungsmittel-Zubereitungen zur Rheologieeinstellung wässriger Systeme aus
A) 10-30 Gew.-% bezogen auf Gesamtzubereitungsmenge, eines Urethangruppen aufweisenden Verdickungsmittels,
B) 50-100 Gew.-% bezogen auf die Menge der Komponente A), eines nicht-ionischen Emulgators,
C) 10-45 Gew.-% bezogen auf die Gesamtzubereitungsmenge eines n Hilfsmittels der Formel (I) 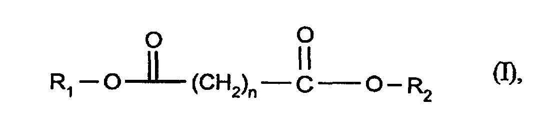 in welcher unabhängig voneinander
R₁ ein aliphatischer Alkylrest von C₁-C₆ oder ein cyclischer Alkylrest bis C₆, insbesondere R₁ = Methyl, Ethyl- oder Propylrest,
R₂ ein aliphatischer Alkylrest von C₁-C₆ oder ein cyclischer Alkylrest von C₄-C₆, insbesondere R₁ = Methyl, Ethyl- oder Propylrest, und
n ist eine ganze Zahl von 1 bis 6, vorzugsweise von 1 bis 4,
bedeutet, und
D) 5-70 Gew.-% Wasser und/oder weiteren wasserverdünnbaren Lösemitteln bzw. Verdünnungsreagenz, wobei die Gesamtmenge der Komponenten C und D nicht mehr als 90 Gew.-% der Gesamtmenge der Verdicker-Zubereitung ausmacht.

2. 1 bis 80 Gew.-%ige Lösungen oder Dispersionen der Verdickungsmittel-Zubereitungen gemäß Anspruch 1.

3. Verwendung der Lösungen oder Dispersionen gemäß Anspruch 1 als verdickend wirkende Zusatzmittel in wässrigen Systemen, ausgewählt aus der Gruppe der wässrigen oder wasserverdünnbaren Kraftfahrzeug- und Industrielacke, Putz- und Anstrichfarben, Druck- und Textilfarben, Pigmentdruckpasten, pharmazeutische und kosmetische Formulierungen, Zubereitungen von Waschmitteln, Klebstoffen, Wachsen und Polituren.

## Claims

1. Thickener preparations for adjusting the rheology of aqueous systems, comprising
A) 10-30 wt.%, referred to the total amount of the preparation, of a thickener containing urethane groups
B) 50-100 wt.%, referred to the amount of the component A), of a nonionic emulsifier,
C) 10-45 wt.%, referred to the total amount of the preparation, of an auxiliary of the formula (I), 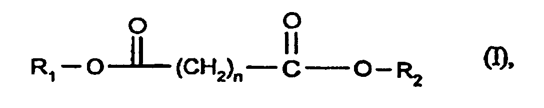 in which, independently of one another,
R₁ denotes an aliphatic C₁-C₆ alkyl radical or a cyclic alkyl radical with up to 6 C atoms, in particular R₁ = methyl, ethyl or propyl radical,
R₂ denotes an aliphatic C₁-C₆ alkyl radical or a cyclic C₄-C₆ alkyl radical, in particular R₁ = methyl, ethyl or propyl radical, and
n is a whole number from 1 to 6, preferably from 1 to 4,
and
D) 5-70 wt.% of water and/or further water-thinnable solvents or dilution reagent, the total amount of the components C and D not amounting to more than 90 wt.% of the total amount of the thickener preparation.

2. 1 to 80 wt.% solutions or dispersions of the thickener preparations according to claim 1.

3. The use of the solutions or dispersions according to claim 1 as additives with a thickening effect in aqueous systems, selected from the group comprising aqueous or water-thinnable motor vehicle paints, industrial paints, plasters and paints, printing and textile printing inks, pigment printing pastes, pharmaceutical and cosmetic formulations, preparations of detergents, adhesives, waxes and polishes.

## Revendications

1. Préparations d'épaississants pour le réglage de la rhéologie de systèmes aqueux composées de:
A) 10 à 30% en poids par rapport à la quantité totale de préparation d'un épaississant présentant des radicaux uréthane,
B) 50 à 100% en poids par rapport à la quantité A) d'un émulsifiant non ionique,
C) 10 à 45% en poids par rapport à la quantité totale de préparation d'un adjuvant de formule (I) 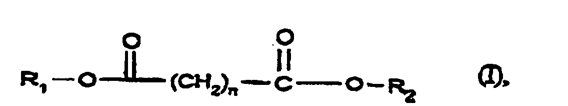 dans laquelle, indépendamment l'un de l'autre,
R¹ désigne un radical alkyle aliphatique C₁-C₆ ou un radical alkyle cyclique jusqu'à C₆, en particulier R¹ = un radical méthyle, éthyle ou propyle,
R² désigne un radical alkyle aliphatique C₁-C₆ ou un radical alkyle cyclique C₄-C₆, en particulier R¹ = un radical méthyle, éthyle ou propyle, et
n est un nombre entier de 1 à 6, de préférence de 1 à 4,
et
D) 5 à 70% en poids d'eau et/ou d'autres solvants diluables dans l'eau ou un réactif de dilution, la quantité totale des composants C ou D ne constituant pas plus de 90% en poids de la quantité totale de la préparation épaississante.

2. Solutions ou dispersions de 1 à 80% en poids de préparations d'épaississants selon la revendication 1.

3. Mise en oeuvre des solutions ou dispersions selon la revendication 1 comme additifs épaississants dans des systèmes aqueux, sélectionnés dans le groupe des peintures automobiles ou industrielles, des crépis et peintures, encres d'imprimerie et peintures textiles, pâtes d'impression à pigment, formulations pharmaceutiques et cosmétiques, préparations de lessives, adhésifs, cires et vernis, aqueux ou diluables dans l'eau .
